# EUROPEAN PATENT SPECIFICATION

(11) **EP 2 252 423 B1**
(45) Date of publication and mention of the grant of the patent: **07.09.2011**
(21) Application number: 08751486.5
(22) Date of filing: 27.02.2008
(51) Int. Cl.: B23D 57/00, B28D 1/08

(54) **MACHINE FOR MULTIPLE WIRE CUTTING OF STONE MATERIALS**
MASCHINE ZUM MEHRDRAHTSCHNEIDEN VON STEINMATERIALIEN
MACHINE POUR DÉCOUPER DES MATÉRIAUX EN PIERRE AVEC PLUSIEURS FILS

(43) Date of publication of application: 24.11.2010
(73) Proprietor: Pelmine S.r.l, 37135 Verona (IT)
(72) Inventor: PELLEGRINI, Marco, I-37031 Illasi (Verona) (IT)
(74) Representative: Ponchiroli, Simone
(86) International application number: PCT/IT2008/000132
(87) International publication number: WO 2009/107153

(56) References cited:
- EP-A- 1 598 162
- WO-A-2007/036784

## Description

### Technical Field

The present invention relates to a machine for multiple wire cutting of stone materials, designed to obtain a plurality of slabs from blocks of materials such as marble, granite,_stone, etc.

### Background Art

Such machines usually comprise a plurality of cutting devices set alongside each other in parallel planes. Each device consists of a cutting wire wound around at least two pulleys, commonly known as "flywheels", at least one being motor-driven, the wire rotating on them at high speed.

In most cases, in multi-wire machines, the cutting devices are mounted cantilever-style to allow insertion of the looped cutting wire on the machine.

However, over the years there has been a considerable increase in the number of cutting devices present on a single multi-wire machine. This increase lead to the construction of machines, with cutting devices mounted cantilever-style, which had significant disadvantages from a structural viewpoint. Due to the presence of cutting devices (in particular the flywheels) which are large and heavy, the machine is subject to high bending and twisting moments. Consequently, this resulted in the oversizing of the flywheel bearings and shafts and, more generally, of multi-wire machine supporting structures.

For this reasons, when there are more than 30 - 40 cutting wires, the ideal solution, from the structural and mechanical viewpoint, is to support the cutting devices at the two ends of their axes. In this way, the size of the shafts, bearings and supports is significantly reduced and the machine acquires greater structural equilibrium.

A serious disadvantage of said construction solution is the fact that front loading of the various cutting wires, closed in a loop, on the corresponding flywheels is impossible.

One possible solution is to partly disassemble the machine. Obviously, such an operation takes a lot of manpower and, more generally, is very costly.

Another possibility is the use of cutting wires in an open loop whose ends are closed after the wires have been put in position on the flywheels. This solution also has disadvantages, because the joint is a critical element due to fatigue, since every 50 to 70 hours the joint breaks and must be remade. In the case of multi-wire machines, due to the presence of dozens of cutting wires, this disadvantage often stops the machine.

Moreover, when cutting wires with very small diameters (less than 7 - 8 mm) are used, at present it is very difficult to make optimum joints, since the joint has a thickness comparable to the diameter of the cutting wire.

Another possible solution is that presented in patent application WO 2007/036784, on which the preamble of claim 1 is based. Said patent application presents a multi-wire machine in which the cutting devices are supported at both ends of their axes. A cutting wire can be substituted thanks to the fact that on each axis, one of the two supports is modular and has a sliding part which, by moving, creates a compartment through which the looped diamond wire can pass when it must be mounted on or removed from the machine.

However, said solution also has several disadvantages, in particular the fact that, when a cutting wire is substituted, the shaft supporting the pulleys remains suspended cantilever-style since the sliding part moves axially to leave the space needed for the wire to pass. Therefore, said solution does not avoid oversizing of some parts of the multi-wire machine, because it is necessary to support the pulley shaft, which remains suspended cantilever-style during substitution of the cutting wire.

### Disclosure of the Invention

In this situation, the technical need which forms the basis of the present invention is to provide a machine for multiple wire cutting of stone materials which overcomes the above-mentioned disadvantages.

In particular, the technical purpose of the present invention is to provide a machine for multiple wire cutting of stone materials which allows simple and rapid substitution of the looped cutting wire.

Another purpose of the present invention is to provide a machine for multiple wire cutting of stone materials with optimum sizing of the flywheel bearings and shafts and, more generally, of the machine supporting structures.

Yet another technical purpose of the present invention is to provide a machine for multiple wire cutting of stone materials which allows the simultaneous cutting of a large number of slabs.

Finally, another technical purpose of the present invention is to provide a machine for multiple wire cutting of stone materials which is of simple construction, reliable and relatively inexpensive.

These aims and others, more apparent in the description which follows, are achieved by the machine for multiple wire cutting of stone materials comprising the technical features described in one or more of the claims herein.

### Brief Description of the Drawings

Further features and advantages of the invention are more apparent from the detailed description of a preferred, non-limiting embodiment of the machine for multiple wire cutting of stone materials according to the present invention.

The invention is described below with reference to the accompanying drawings, provided by way of example only and, therefore, without limiting the scope of the invention, and in which:
Figure 1 is a front view, with some parts cut away to better illustrate others, of a machine for multiple wire cutting of stone materials made in accordance with the present invention;
Figure 2 is an axonometric front view of a supporting beam for the pulleys of the machine of Figure 1, supported at both ends;
Figure 3 and Figure 4 illustrate the wire substitution zone of the supporting beam of Figure 2, with the cutting wire substitution system in a first operating position and with the cutting wires in the working zone for their positioning on the pulleys;
Figure 5 is an enlarged view of the pulley supporting beam of Figure 2, in the wire substitution zone, with the cutting wire substitution system in a second operating position;
Figure 6 is a view of the wire substitution zone of Figure 5, with the cutting wires in position; .
Figure 7 is a view, according to the cross-section VII - VII from Figure 5, of the cutting wire substitution system, without the cutting wires, in accordance with a first embodiment;
Figures 7a and 7b illustrate a second and a third embodiment, alternatives to that of Figure 7;
Figure 8 is a view, according to the cross-section VIII - VIII from Figure 6, of the cutting wire substitution system, with the cutting wires inserted in a suitable groove;
Figure 9 is a view, according to the cross-section IX - IX from Figure 3, of the cutting wire substitution system, in the first operating position;
Figure 10 is a view, according to the cross-section X - X from Figure 5, of the cutting wire substitution system, in the second operating position;
Figure 11 is an axonometric front view of a pulley supporting beam of the machine of Figure 1, with a fourth embodiment of the cutting wire substitution system, in the first operating position; and
Figure 12 is an axonometric front view of the supporting beam of Figure 11, in the second operating position.

### Detailed Description of the Preferred Embodiments of the Invention

With reference to the accompanying drawings, the numeral 1 denotes as a whole a machine for multiple wire cutting of stone material in accordance with the present invention.

The machine 1 comprises a supporting structure 2 and a carriage 3 on which a block 4 of stone material can be positioned. The supporting structure 2 comprises a fixed part 5 on which a frame 6, preferably movable, is mounted. Mounted on the frame 6 there is a plurality of cutting devices 7, positioned parallel with one another so that they can simultaneously make a plurality of cuts in the block 4 of stone material, thanks to the presence of means which allow the frame 6 and the carriage 3 to slide vertically relative to each other.

In the preferred embodiments illustrated in the accompanying drawings, the frame 6 can slide on the fixed part 5 of the supporting structure and moves along a substantially vertical direction A. In that way, the cutting devices 7, integral with the frame 6, cut the block 4 of stone material positioned on the carriage 3. In another embodiment (not illustrated in the accompanying drawings) the frame 6 is rigidly fixed to the fixed part 5 of the machine 1 supporting structure 2 and the carriage 3 can move in the substantially vertical direction A, so that again the block 4 of stone material is cut.

In the various embodiments the supporting structure 2 is fixed to the floor (as in the embodiments illustrated in the accompanying drawings) or it may move on a horizontal track, on which it is mounted in such a way that it can run on wheels. In this case, there are movement means (of the known type) operatively connected to the structure so that it can move along the track when the command is given.

Each cutting device 7 in turn comprises at least one idle pulley 8, freely rotating about its own axis of rotation J and at least one motor-driven pulley 9. The motor-driven pulley 9 and the idle pulley 8 are substantially coplanar and lie in a plane that is substantially vertical: therefore, they rotate about substantially horizontal axes of rotation.

In an alternative embodiment, in place of the set of motor-driven pulleys 9 there is a single grooved cylindrical drum. Hereinafter the term motor-driven pulley 9 shall also always refer to the case in which the motor-driven pulley 9 in reality consists of a motor-driven grooved cylindrical drum.

In each cutting device 7, wound in a loop around the motor-driven pulley 9 and the idle pulley 8 there is at least one diamond cutting wire 10. The latter is made to rotate at high speed along a direction of rotation W and, in that way, makes cuts in the block 4 of stone material according to a known technique. To keep the cutting wire 10 in position and under tension, the motor-driven pulley 9 and the idle pulley 8 are preferably spaced out and positioned on the cutting device 7 on opposite sides relative to the block 4 of stone material.

In the embodiments illustrated, the cutting devices 7 also comprise a plurality of smaller additional rotary elements 11 (for example consisting of pulleys), coplanar with the motor-driven pulleys 9 and the idle pulleys 8, the function of the additional rotary elements being to guide the cutting wires 10 in the best possible way.

The various cutting devices 7 are supported by at least one supporting device 12 which passes inside the loops formed by the cutting wires 10, through the planes in which the various cutting devices 7 lie.

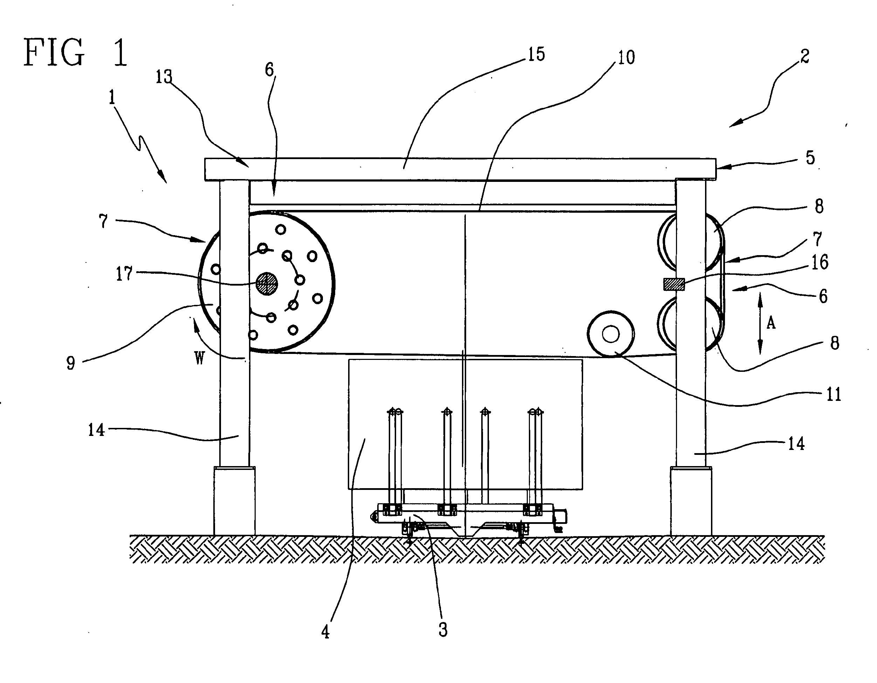

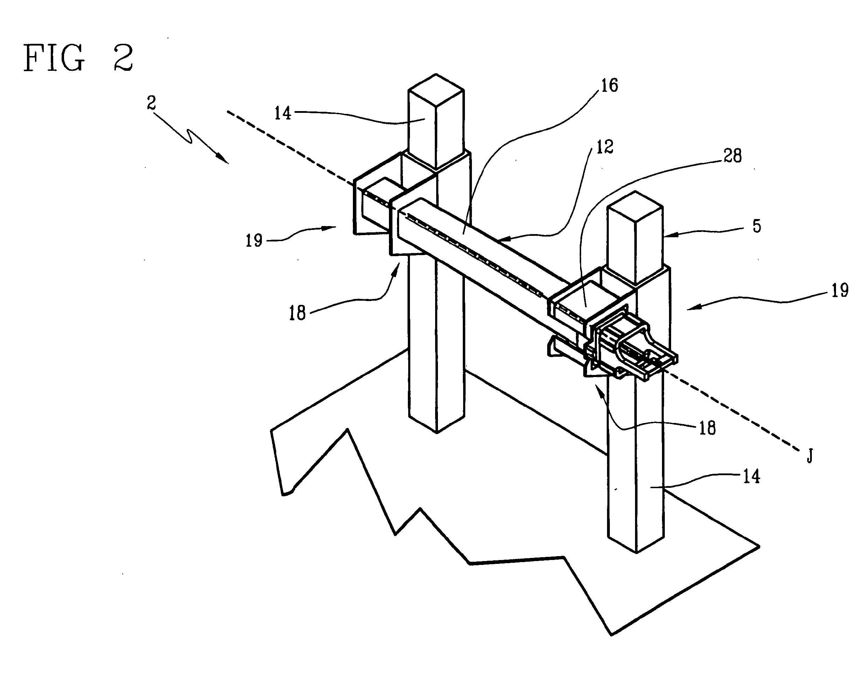

In the embodiments illustrated in the accompanying drawings, in particular in Figure 1, the machine 1 supporting structure 2 comprises a double portal structure 13 (of which only one is visible in Figure 1). Each portal 13 consists of a pair of uprights 14 connected to each other at the top by a joining crosspiece 15, preferably horizontal. In turn the two portals 13 are connected to each other and two supporting devices 12 are supported, each by two uprights 14 of two different portals 13 (Figure 2).

In the embodiments illustrated, the supporting device 12 consists mainly of a central beam 16, suitable for supporting the various pairs of idle pulleys 8, or it mainly consists of a shaft 17, suitable for supporting motor-driven pulleys 9 or, alternatively, it consists of the grooved cylindrical drum. Other embodiments (not illustrated) also involve the use of one or more shafts 17 to support the idle pulleys 8.

Each supporting device 12 is supported by the supporting structure 2, on opposite sides relative to the cutting devices 7 positioned on it, thus forming two supporting portions 18 on the supporting structure 2. Each supporting device 12 supporting portion 18 is supported by the supporting structure 2 at a connecting zone 19.

The supporting device 12 comprises, at least at one of its two supporting portions 18, a part 20 able to move relative to the supporting structure 2. Said movable part 20 is designed to allow the insertion of at least one cutting wire 10 on the cutting devices 7.

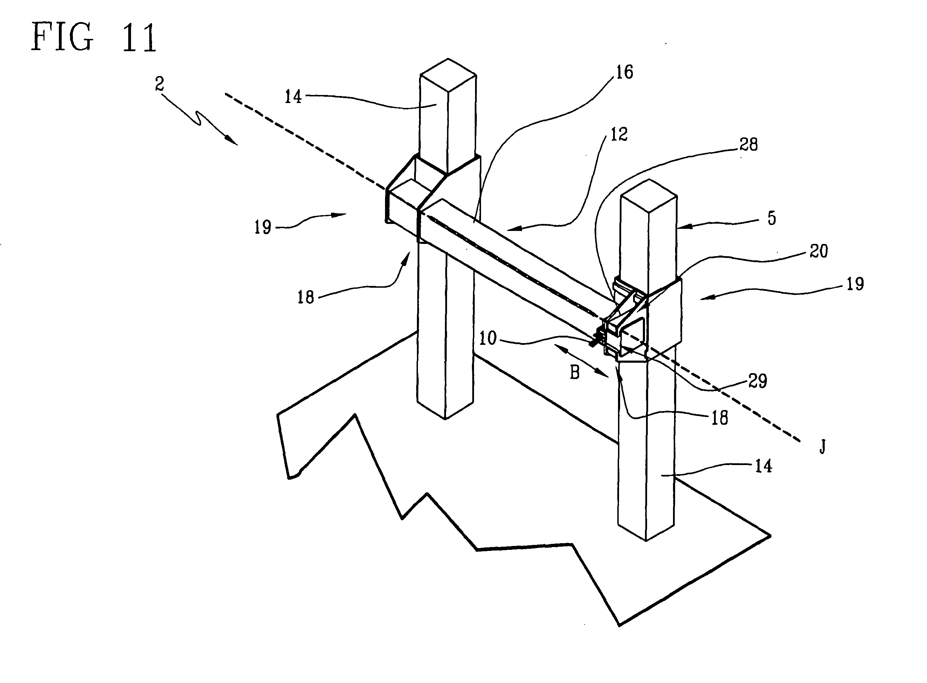

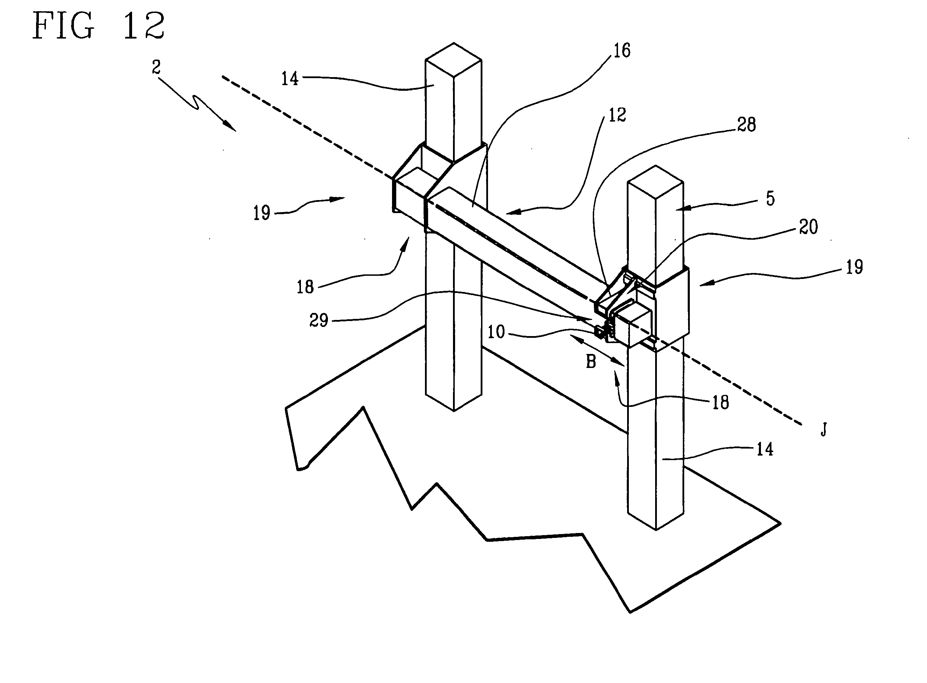

Advantageously, the supporting structure 2 also has, in the connecting zone 19, a supporting body 28 which connects the supporting device 12 to the supporting structure 2. As shown in the embodiments in the accompanying drawings, the supporting body 28 is preferably a body separate from the rest of the supporting structure 2. In the embodiments in Figures 2 to 10, the movable part 20 of the supporting device 12 is inserted and supported inside the supporting body 28. In the embodiment in Figures 11 and 12, the movable part 20 and the supporting body 28 consist of the same element. In another embodiment, not illustrated, the supporting body 28 is completely integrated in the supporting structure 2.

In the embodiments illustrated in Figures 2 to 10, the movable part 20 comprises a bushing 21, positioned between the central beam 16 (or the shaft 17) and the supporting structure 2. In other embodiments (not illustrated), the movable part 20 comprises the entire central beam 16 (or the shaft 17) the whole of which therefore moves.

In all of the above-mentioned embodiments, the movable part 20 slides along a direction of sliding B, substantially parallel with the axes of rotation J of the idle pulleys 8 and, therefore, substantially horizontal.

In the embodiments illustrated in Figures 2 to 10, the movable part 20 also has on its outer surface 22 at least one housing 23, suitable for housing at least one cutting wire 10. In the embodiment illustrated in Figures 11 and 12, the housing 23 is positioned directly on the central beam 16 (or the shaft 17).

The housing 23 preferably lies in a plane at a right angle to the direction of sliding B.

The movable part 20 slides between a first position 24 and a second position 25. During said sliding the supporting device 12 always rests with the two supporting portions 18 on the supporting structure 2.

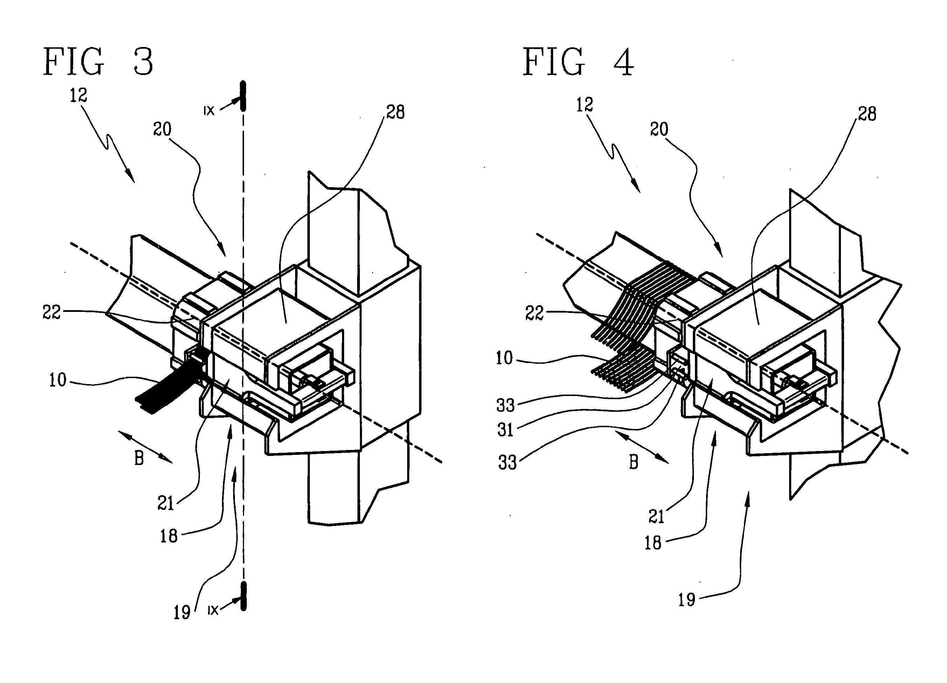

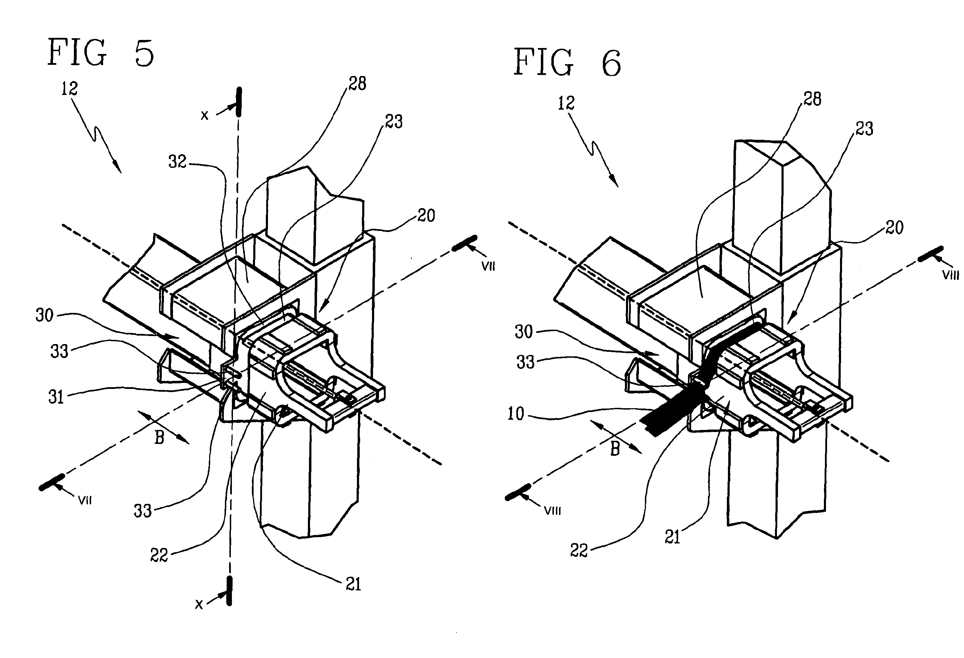

In the first position 24, as illustrated in Figures 3, 4 and 11, the housing 23 is located between the two connecting zones 19 and, more specifically, in the part of the supporting device 12 in which there are the cutting devices 7. In the second position 25, as illustrated in Figures 5, 6 and 12, the housing 23 is located outside and on the opposite side of the connecting zone 19 relative to the first position 24.

In the embodiment in which the movable part 20 comprises the bushing 21 positioned between the central beam 16 (or the shaft 17) and the supporting structure 2, the housing 23 is preferably positioned centrally on the outer surface 22 of the movable part 20.

The machine 1 also has movement means 26 for movable part 20 sliding from the first position 24 to the second position 25 and vice versa. The movement means 26 comprise at least one actuator 27 which acts to move the movable part 20 in the direction of sliding B relative to the supporting structure 2.

The actuator 27 is preferably a hydraulic actuator, as shown in the accompanying drawings, or a pneumatic actuator or an electric device.

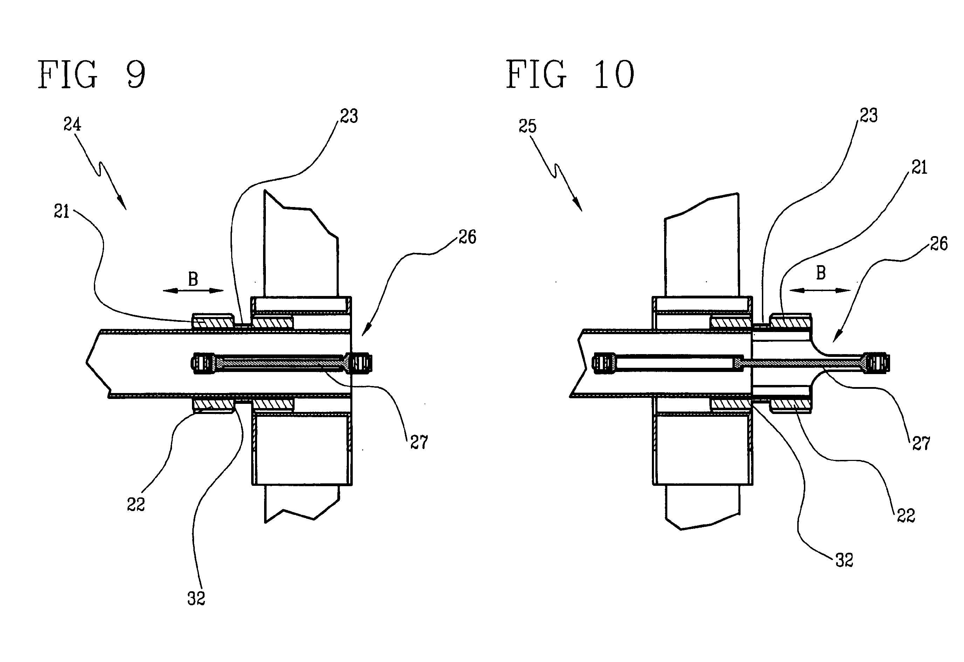

Figures 9 and 10 show the movable part 20 in two different positions. In Figure 9, the movable part 20 is in the first position 24 and the actuator 27 is in the minimum extension position. In Figure 10 the movable part 20 is in the second position 25 and the actuator 27 is in the maximum extension position.

As illustrated in these Figures, the actuator 27 is advantageously fixed on the central beam 16 (or on the shaft 17) and acts on the movable part 20. In another embodiment, not illustrated in the accompanying drawings, the actuator 27 is fixed on the movable part 20 and acts on the central beam 16 (or on the shaft 17). Moreover, in the embodiment in which the movable part comprises the entire central beam 16, the actuator 27 is fixed on the central beam 16 (or on the supporting structure 2) and acts on the supporting structure 2 (or on the central beam 16).

The machine 1 also comprises a longitudinal passage 29, in a direction substantially parallel with the direction of sliding B. Said longitudinal passage 29 is suitable for housing at least one cutting wire 10 and is made on the supporting device 12 and/or on the supporting structure 2 (in particular, on the supporting body 28) along the entire connecting zone 19.

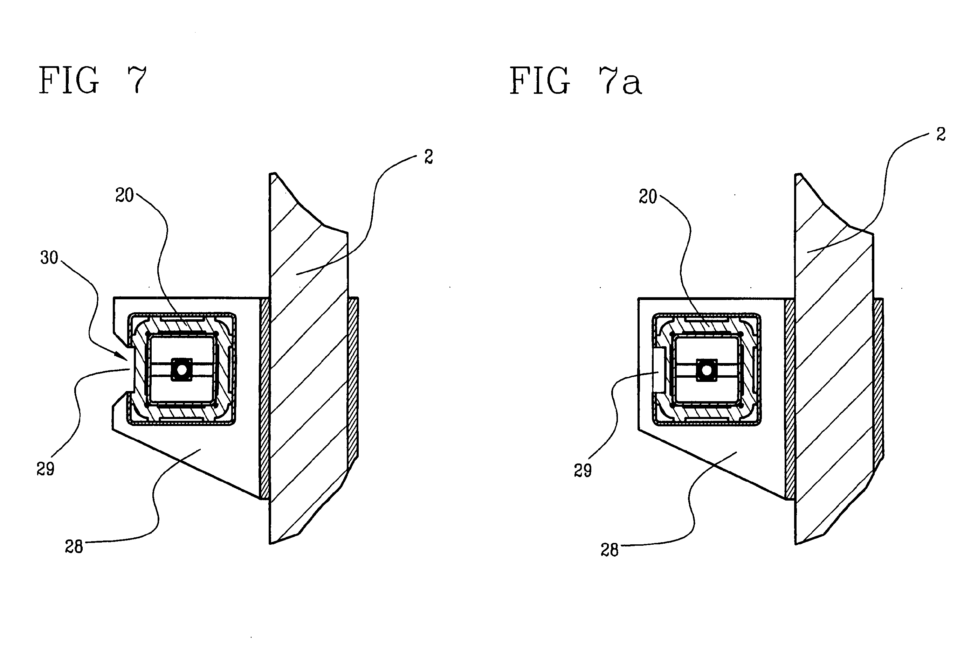

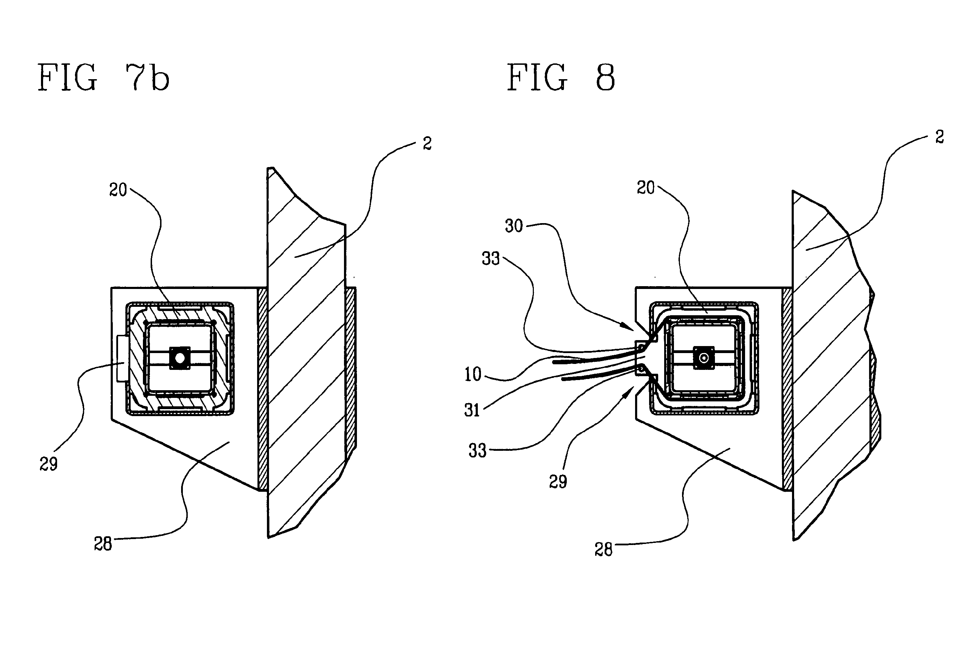

As illustrated in Figures 7, 7a and 7b, the longitudinal passage 29 has various possible embodiments. In Figure 7, the longitudinal passage 29 consists of an opening 30 along the entire extension of the supporting body 28. In Figure 7a, the longitudinal passage 29 consists of a passage made on the supporting device 12. In Figure 7b, the longitudinal passage 29 consists of a passage made on the supporting body 28.

According to another alternative embodiment not illustrated in the accompanying drawings, the longitudinal passage 29 consists of a passage made partly on the supporting device 12 and partly on the supporting body 28.

In the preferred embodiment in Figure 7, since the longitudinal passage 29 consists of the opening 30, the supporting body 28 consists of a C-shaped open body. The supporting body 28 is positioned on the machine 1 frame 6 and, in the preferred embodiment, slides in the substantially vertical direction A.

Moreover, the longitudinal passage 29 is advantageously in communication with the housing 23. More specifically, the longitudinal passage 29 and the housing 23 are in communication with each other in such a way that at least one cutting wire 10 can be inserted there, without interruption.

Advantageously, the movable part 20 comprises means for guiding the cutting wires 10 during the passage through the connecting zone 19. In the preferred embodiment, in which the longitudinal passage 29 consists of the opening 30, said means for guiding the cutting wires 10 comprise a projecting plate 31, positioned at one edge 32 of the housing 23.

The projecting plate 31 is substantially at a right angle to the direction of sliding B and positioned in such a way that it can slide in the opening 30 when the movable part 20 slides between the first position 24 and the second position 25.

On the projecting plate 31 there are also two guides 33, positioned substantially at right angles to the projecting plate 31 and parallel with the direction of sliding B.

As illustrated in Figures 3, 6, 8, 11 and 12, said solution facilitates the passage or one or more cutting wires 10 through the connecting zone 19, preventing them from catching on the connecting zone 19.

Many aspects of operation of the machine 1 disclosed are derived from the structural description above.

In particular, in the preferred embodiment, to allow a cutting wire 10 to be loaded on the machine 1, the process is as follows. The movable part 20 is moved to the second position 25 (Figure 5). The cutting wire 10 is rested in the housing 23, around the entire movable part 20, and inserted in the longitudinal passage 29 between the two guides 33 of the projecting plate 31 (Figure 6).

The movable part 20 is moved from the second position 25 to the first position 24 (Figure 3) and during the sliding the cutting wire 10 passes through the opening 30. At this point, the cutting wire 10 is inside the double portal structure 13, wound around the supporting device 12 and can be positioned on the cutting device 7 (Figure 4).

The machine for multiple wire cutting disclosed achieves the preset aims.

First, the machine for multiple wire cutting disclosed allows simple and rapid substitution of the looped cutting wire.

Second, the machine disclosed has optimum sizing of the flywheel bearings and shafts and, more generally, of the machine supporting structures.

Moreover, the present invention allows simultaneous cutting of a large number of slabs on the same block of stone material, thanks to the presence of a large number of cutting devices.

It should also be noticed that the present invention is relatively easy to produce and even the cost linked to implementation of the invention is not very high.

## Claims

1. A machine (1) for multiple wire cutting of stone materials comprising:
a supporting structure (2);
a plurality of cutting devices (7) mounted parallel with one another on the supporting structure (2), each cutting device (7) in turn comprising:
at least one idle pulley (8), freely rotating about its own axis of rotation (J);
at least one motor-driven pulley (9), substantially coplanar with the idle pulley (8);
at least one cutting wire (10), wound in a loop around the motor-driven pulley (9) and the idle pulley (8);
the machine (1) also comprising at least one supporting device (12) for the cutting devices (7), passing through the planes in which the cutting devices (7) lie, inside the loops formed by the cutting wires (10), and having two supporting portions (18) located on opposite sides of the cutting devices (7), each of the supporting portions being supported by the,supporting structure (2) at a respective connecting zone (19); the supporting device (12) comprising, at least at one of the supporting portions (18), at least one part (20) able to move relative to the supporting structure (2) along a direction of sliding (B), substantially parallel with the idle pulley (8) axis of rotation (J);
the machine being **characterised in that**
close to the supporting portion (18), the supporting device (12) has at least one housing (23), suitable for housing at least one cutting wire (10);
and also being **characterised in that** the movable part (20) slides between a first position (24), in which the housing (23) is located between the two connecting zones (19) of the supporting device (12), and a second position (25), in which the housing (23) is located outside and on the opposite side of the connecting zone (19) relative to the first position (24); and
the machine (1) also comprising a longitudinal passage (29), in a direction substantially parallel with the direction of sliding (B), suitable for housing at least one cutting wire (10) and made on the supporting device (12) and/or on the supporting structure (2) along the entire connecting zone (19), in communication with the housing (23).

2. The machine (1) for multiple wire cutting according to claim 1, **characterised in that** the supporting device (12) rests on the two supporting portions (18) during sliding of the movable part (20) between the first position (24) and the second position (25).

3. The machine (1) for multiple wire cutting according to any of the foregoing claims, **characterised in that** the supporting device (12) comprises a central beam (16) for supporting the cutting devices (7).

4. The machine (1) for multiple wire cutting according to any of the foregoing claims, **characterised in that** the movable part (20) of the supporting device (12) has the housing (23) on its outer surface (22).

5. The machine (1) for multiple wire cutting according to claims 3 and 4, **characterised in that** the movable part (20) comprises a bushing (21) which slides between the central beam (16) and the supporting structure (2).

6. The machine (1) for multiple wire cutting according to claims 3 and 4, **characterised in that** the movable part (20) comprises the central beam (16) which slides on the supporting structure (2).

7. The machine (1) for multiple wire cutting according to claim 3 or 4 when it depends on claims 3, 5 and 6, **characterised in that** the central beam (16) comprises a shaft (17) for supporting one or more motor-driven pulleys (9).

8. The machine (1) for multiple wire cutting according to claim 3 or 4 when it depends on claims 3, 5 and 6, **characterised in that** the central beam (16) supports a plurality of idle pulleys (8).

9. The machine (1) for multiple wire cutting according to any of the foregoing claims, **characterised in that** in the connecting zone (19) the supporting structure (2) comprises a C-shaped supporting body (28).

10. The machine (1) for multiple wire cutting according to any of the claims from 7 to 9 when they depend on one of the claims from 1 to 3, **characterised in that** the movable part (20) and the supporting body (28) consist of the same element.

11. The machine (1) for multiple wire cutting according to claim 9, **characterised in that** the movable part (20) is inserted and supported inside the supporting body (28).

12. The machine (1) for multiple wire cutting according to claim 10 or 11, **characterised in that** the longitudinal passage (29) is made on the supporting body (28) and consists of an opening (30) along the entire extension of the supporting body (28).

13. The machine (1) for multiple wire cutting according to any of the foregoing claims, **characterised in that** the movable part (20) comprises means for guiding the cutting wires (10) during the passage through the connecting zone (19).

14. The machine (1) for multiple wire cutting according to claims 12 and 13, **characterised in that** the means for guiding the cutting wires (10) comprise:
a projecting plate (31) positioned at one edge (32) of the housing (23), substantially at a right angle to the direction of sliding (B) and in such a way as to slide in the opening (30) when the movable part (20) slides between the first position (24) and the second position (25),
at least two guides (33), positioned substantially at right angles to the projecting plate (31) and parallel with the direction of sliding (B).

15. The machine (1) for multiple wire cutting according to any of the foregoing claims, **characterised in that** it also comprises movement means (26) for movable part (20) sliding from the first position (24) to the second position (25) and vice versa.

16. The machine (1) for multiple wire cutting according to claim 15, **characterised in that** the movement means (26) comprise an actuator (27) which acts to move the movable part (20) relative to the supporting structure (2) in the direction of sliding (B).

17. The machine (1) for multiple wire cutting according to claim 16, **characterised in that** the actuator (27) is driven by means of a fluid.

18. The machine (1) for multiple wire cutting according to claim 16, **characterised in that** the actuator (27) is driven electrically.

19. The machine (1) for multiple wire cutting according to any of the foregoing claims, **characterised in that** the motor-driven pulleys (9) of the cutting devices (7) consist of a single cylindrical drum.

20. The machine (1) for multiple wire cutting according to any of the foregoing claims, **characterised in that** the direction of sliding (B) is substantially horizontal.

21. The machine (1) for multiple wire cutting according to any of the foregoing claims, **characterised in that** the housing (23) lies in a plane which is at a right angle to the direction of sliding (B).

22. The machine (1) for multiple wire cutting according to claim 4, **characterised in that** the housing (23) is positioned centrally on the outer surface (22) of the movable part (20).

23. The machine (1) for multiple wire cutting according to any of the foregoing claims, **characterised in that** the supporting structure (2) comprises a double portal structure (13) having two pairs of uprights (14), on each of which a supporting device (12) is mounted.

24. The machine (1) for multiple wire cutting according to any of the foregoing claims, **characterised in that** the supporting structure (2) comprises:
a fixed part (5); and
a frame (6), mounted on the fixed part (5) and on which the cutting devices are fixed;
the machine (1) also comprising
a carriage (3), on which a block (4) of stone material can be positioned; and
means for vertical sliding of the frame (6) and the carriage (3) relative to one another.

## Patentansprüche

1. Maschine (1) zum Mehrfachdrahtschneiden von Steinmaterialien, enthaltend:
- eine Trägerstruktur (2);
- eine Anzahl von Schneidvorrichtungen (7), montiert parallel zueinander an der Trägerstruktur (2), wobei jede Schneidvorrichtung (7) wiederum enthält:
- wenigstens eine leerlaufende Scheibe (8), die sich frei um ihre eigene Drehachse (J) dreht;
- wenigstens eine angetriebene Scheibe (9), im wesentlichen koplanar zu der leerlaufenden Scheibe (8);
- wenigstens einen Schneiddraht (10), schlaufenförmig gewunden um die angetriebene Scheibe (9) und die leerlaufende Scheibe (8);
wobei die Maschine (1) ebenfalls wenigstens eine Trägervorrichtung (12) für die Schneidvorrichtungen (7) enthält, die durch die Ebenen verläuft, in welcher die Schneidvorrichtungen (7) liegen, und zwar innerhalb der durch die Schneiddrähte (10) geformten Schlaufen, sowie zwei Trägerabschnitte (18), angeordnet auf den entgegengesetzten Seiten der Schneidvorrichtungen (7), wobei jeder der Trägerabschnitte durch die Trägerstruktur (2) an einem jeweiligen Anschlussbereich (19) gehalten ist; und wobei die Trägervorrichtung (12) an wenigstens einem der Trägerabschnitte (18) wenigstens einen Teil (20) enthält, der in der Lage ist, sich im Verhältnis zu der Trägerstruktur (2) entlang einer Gleitrichtung (B) zu bewegen, die im wesentlichen parallel zu der Drehachse (J) der leerlaufenden Scheibe (8) verläuft;
wobei die Maschine **dadurch gekennzeichnet ist, dass** dicht an dem Trägerabschnitt (18) die Trägervorrichtung (12) wenigstens ein Gehäuse (23) hat, geeignet zur Aufnahme von wenigstens einem Schneiddraht (10);
und ebenfalls **dadurch gekennzeichnet, dass** der bewegliche Teil (20) gleitet zwischen einer ersten Position (24), in welcher das Gehäuse (23) zwischen den beiden Anschlussbereichen (19) der Trägervorrichtung (12) angeordnet ist, und einer zweiten Position (25), in welcher das Gehäuse (23) im Verhältnis zu der ersten Position (24) ausserhalb und an der entgegengesetzten Seite des Anschlussbereiches (19) angeordnet ist; und
die Maschine (1) ebenfalls einen längsverlaufenden Durchlass (29) in einer Richtung enthält, die im wesentlichen parallel zu der Gleitrichtung (B) verläuft, geeignet zur Aufnahme von wenigstens einem Schneiddraht (10), und die an der Trägervorrichtung (12) und/oder an der Trägerstruktur (2) hergestellt ist, und zwar entlang dem gesamten Anschlussbereich (19) und in Verbindung mit dem Gehäuse (23).

2. Maschine (1) zum Mehrfachdrahtschneiden nach Patentanspruch 1, **dadurch gekennzeichnet, dass** die Trägervorrichtung (12) während des Gleitens des beweglichen Teils (20) zwischen der ersten Position (24) und der zweiten Position (25) an den beiden Trägerabschnitten (18) verbleibt.

3. Maschine (1) zum Mehrfachdrahtschneiden nach einem jeden der vorstehenden Patentansprüche, **dadurch gekennzeichnet, dass** die Trägervorrichtung (12) einen mittleren Balken (16) zum Tragen der Schneidvorrichtung (7) enthält.

4. Maschine (1) zum Mehrfachdrahtschneiden nach einem jeden der vorstehenden Patentansprüche, **dadurch gekennzeichnet, dass** der bewegliche Teil (20) der Trägervorrichtung (12) das Gehäuse (23) an seiner äusseren Oberfläche (22) hat.

5. Maschine (1) zum Mehrfachdrahtschneiden nach den Patentansprüchen 3 und 4, **dadurch gekennzeichnet, dass** der bewegliche Teil (20) eine Laufbuchse (21) enthält, welche zwischen dem mittleren Balken (16) und der Trägerstruktur (2) gleitet.

6. Maschine (1) zum Mehrfachdrahtschneiden nach den Patentansprüchen 3 und 4, **dadurch gekennzeichnet, dass** der bewegliche Teil (20) den mittleren Balken (16) enthält, welcher an der Trägerstruktur (2) gleitet.

7. Maschine (1) zum Mehrfachdrahtschneiden nach Patentanspruch 3 oder 4, wenn abhängig von den Patentansprüchen 3, 5 und 6, **dadurch gekennzeichnet, dass** der mittlere Balken (16) eine Welle (17) enthält, um eine oder mehrere angetriebene Scheiben (9) zu tragen.

8. Maschine (1) zum Mehrfachdrahtschneiden nach Patentanspruch 3 oder 4, wenn abhängig von den Patentansprüchen 3, 5 und 6, **dadurch gekennzeichnet, dass** der mittlere Balken (16) eine Anzahl von leerlaufenden Scheiben (8) trägt.

9. Maschine (1) zum Mehrfachdrahtschneiden nach einem jeden der vorstehenden Patentansprüche, **dadurch gekennzeichnet, dass** in dem Anschlussbereich (19) die Trägerstruktur (2) einen C-förmigen Haltekörper (28) enthält.

10. Maschine (1) zum Mehrfachdrahtschneiden nach einem jeden der Patentansprüche von 7 bis 9, wenn sie abhängig sind von einem der Patentansprüche von 1 bis 3, **dadurch gekennzeichnet, dass** der bewegliche Teil (20) und der Haltekörper (28) aus ein und demselben Element bestehen.

11. Maschine (1) zum Mehrfachdrahtschneiden nach Patentanspruch 9, **dadurch gekennzeichnet, dass** der bewegliche Teil (20) in den Haltekörper (28) eingesetzt und von diesem getragen ist.

12. Maschine (1) zum Mehrfachdrahtschneiden nach Patentanspruch 10 oder 11, **dadurch gekennzeichnet, dass** der längsverlaufende Durchlass (29) in den Haltekörper (28) eingearbeitet ist und aus einer Öffnung (30) entlang der gesamten Ausdehnung des Haltekörpers (28) besteht.

13. Maschine (1) zum Mehrfachdrahtschneiden nach einem jeden der vorstehenden Patentansprüche, **dadurch gekennzeichnet, dass** der bewegliche Teil (20) Mittel zum Führen der Schneiddrähte (10) während des Durchlaufs durch den Anschlussbereich (19) enthält.

14. Maschine (1) zum Mehrfachdrahtschneiden nach den Patentansprüchen 12 und 13, **dadurch gekennzeichnet, dass** die Mittel zum Führen der Schneiddrähte (10) wie folgt enthalten:
- eine hervorstehende Platte (31), positioniert an einem Rand (32) des Gehäuses (23), und zwar im wesentlichen im rechten Winkel zu der Gleitrichtung (B) und auf solche Weise, dass sie in der Öffnung (30) gleitet, wenn sich der bewegliche Teil (20) zwischen der ersten Position (24) und der zweiten Position (25) bewegt;
- und wenigstens zwei Führungen (33), positioniert im wesentlichen im rechten Winkel zu der hervorstehenden Platte (31) und parallel zu der Gleitrichtung (B) verlaufend.

15. Maschine (1) zum Mehrfachdrahtschneiden nach einem jeden der vorstehenden Patentansprüche, **dadurch gekennzeichnet, dass** sie ebenfalls Bewegungsmittel (26) für den von der ersten Position (24) in die zweite Position (25) und umgekehrt gleitenden beweglichen Teil (20) enthält.

16. Maschine (1) zum Mehrfachdrahtschneiden nach Patentanspruch 15, **dadurch gekennzeichnet, dass** die Bewegungsmittel (26) einen Antrieb (27) enthalten, welcher den beweglichen Teil (20) im Verhältnis zu der Trägerstruktur (2) in der Gleitrichtung (B) bewegt.

17. Maschine (1) zum Mehrfachdrahtschneiden nach Patentanspruch 16, **dadurch gekennzeichnet, dass** der Antrieb (27) mit Hilfe eines Fluids betätigt ist.

18. Maschine (1) zum Mehrfachdrahtschneiden nach Patentanspruch 16, **dadurch gekennzeichnet, dass** der Antrieb (27) elektrisch betätigt ist.

19. Maschine (1) zum Mehrfachdrahtschneiden nach einem jeden der vorstehenden Patentansprüche, **dadurch gekennzeichnet, dass** die angetriebenen Scheiben (9) der Schneidvorrichtungen (7) aus einer einzelnen zylindrischen Trommel bestehen.

20. Maschine (1) zum Mehrfachdrahtschneiden nach einem jeden der vorstehenden Patentansprüche, **dadurch gekennzeichnet, dass** die Gleitrichtung (B) im wesentlichen horizontal verläuft.

21. Maschine (1) zum Mehrfachdrahtschneiden nach einem jeden der vorstehenden Patentansprüche, **dadurch gekennzeichnet, dass** das Gehäuse (23) auf einer Ebene liegt, die im rechten Winkel zu der Gleitrichtung (B) verläuft.

22. Maschine (1) zum Mehrfachdrahtschneiden nach Patentanspruch 4, **dadurch gekennzeichnet, dass** das Gehäuse (23) zentral an der äusseren Oberfläche (22) des beweglichen Teils (20) positioniert ist.

23. Maschine (1) zum Mehrfachdrahtschneiden nach einem jeden der vorstehenden Patentansprüche, **dadurch gekennzeichnet, dass** die Trägerstruktur (2) eine doppelte Portalstruktur (13) mit zwei Paaren von Ständern (14) enthält, von welchen an jedem eine Trägerstruktur (12) montiert ist.

24. Maschine (1) zum Mehrfachdrahtschneiden nach einem jeden der vorstehenden Patentansprüche, **dadurch gekennzeichnet, dass** die Trägerstruktur (2) wie folgt enthält:
- einen feststehenden Teil (5); und
- einen Rahmen (6), montiert an dem feststehenden Teil (5), und an welchem die Schneidvorrichtungen befestigt sind;
wobei die Maschine (1) ebenfalls enthält:
- einen Schlitten (3), auf welchem ein Steinblock (4) positioniert werden kann; und
- Mittel zum vertikalen Verschieben des Rahmens (6) und des Schlittens (3) im Verhältnis zueinander.

## Revendications

1. Machine (1) pour coupe multiple par fil de matériaux en pierre comprenant :
une structure de support (2) ;
un ensemble de dispositifs de coupe (7) montés parallèlement les uns par rapport aux autres sur la structure de support (2), chaque dispositif de coupe comprenant :
au moins une poulie folle (8), pivotant librement autour de son propre axe de rotation (J) ;
au moins une poulie motorisée (9), substantiellement dans le même plan que la poulie folle (8) ;
au moins un fil de coupe (10), enroulé en boucle autour de la poulie motorisée (9) et de la poulie folle (8) ;
la machine (1) comprenant également au moins un dispositif de support (12) pour les dispositifs de coupe (7), traversant les plans dans lesquels s'étendent les dispositifs de coupe (7), à l'intérieur des boucles formées par les fils de coupe (10), et présentant deux parties de support (18) situées sur les côtés opposés des dispositifs de coupe (7), chaque partie de support étant soutenue par la structure de support (2) dans une zone de raccordement respective (19) ; le dispositif de support (12) comprenant, au moins sur l'une des parties de support (18), au moins une pièce (20) pouvant se déplacer par rapport à la structure de support (2) le long d'une direction de coulissement (B), substantiellement parallèle à l'axe de rotation (J) de la poulie folle (8) ;
la machine étant **caractérisée par le fait que**
à proximité de la partie de support (18), le dispositif de support (12) présente au moins un logement (23), pour loger au moins un fil de coupe (10) ;
ainsi que **par le fait que** la partie déplaçable (20) coulisse entre une première position (24), à laquelle le logement (23) est situé entre les deux zones de raccordement (19) du dispositif de support (12), et une deuxième position (25), à laquelle le logement (23) est situé en dehors et dessus le côté opposé de la zone de raccordement (19) par rapport à la première position (24) ; et
que la machine (1) comprend aussi un passage longitudinal (29), dans une direction substantiellement parallèle à la direction de coulissement (B), prévu pour le logement d'au moins un fil de coupe (10) et réalisé sur le dispositif de support (12) et/ou sur la structure de support (2) le long de toute la zone de raccordement (19), communiquant avec le logement (23).

2. Machine (1) pour coupe multiple par fil selon la revendication 1, **caractérisée par le fait que** le dispositif de support (12) repose sur deux parties de support (18) pendant le coulissement de la partie déplaçable (20) entre la première position (24) et la deuxième position (25).

3. Machine (1) pour coupe multiple par fil selon les revendications précédentes, **caractérisée par le fait que** le dispositif de support (12) comprend une traverse centrale (16) pour soutenir les dispositifs de coupe (7).

4. Machine (1) pour coupe multiple par fil selon les revendications précédentes, **caractérisée par le fait que** la partie déplaçable (20) du dispositif de support (12) présente le logement (23) sur sa surface extérieure (22).

5. Machine (1) pour coupe multiple par fil selon les revendications 3 et 4, **caractérisée par le fait que** la partie déplaçable (20) comprend un fourreau (21) qui coulisse entre la traverse centrale (16) et la structure de support (2).

6. Machine (1) pour coupe multiple par fil selon les revendications 3 et 4, **caractérisée par le fait que** la partie déplaçable (20) comprend la traverse centrale (16) qui coulisse sur la structure de support (2).

7. Machine (1) pour coupe multiple par fil selon les revendications 3 et 4, à l'occurrence des revendications 3, 5 et 6, **caractérisée par le fait que** la traverse centrale (16) comprend un arbre (17) pour supporter une ou plusieurs poulies motorisées (9).

8. Machine (1) pour coupe multiple par fil selon les revendications 3 et 4, à l'occurrence des revendications 3, 5 et 6, **caractérisée par le fait que** la traverse centrale (16) supporte plusieurs poulies folles (8).

9. Machine (1) pour coupe multiple par fil selon les revendications précédentes, **caractérisée par le fait que** dans la zone de raccordement (19) la structure de support (2) comprend un corps de support en forme de C (28).

10. Machine (1) pour coupe multiple par fil selon toute revendication précédente 10, de 7 à 9 et à l'occurrence des revendications 1 à 3, **caractérisée par le fait que** la partie déplaçable (20) et le corps de support (28) se composent d'un même élément.

11. Machine (1) pour coupe multiple par fil selon les revendications 9, 15, **caractérisée par le fait que** la partie déplaçable (20) est insérée et soutenue dans/par le corps de support (28).

12. Machine (1) pour coupe multiple par fil selon les revendications 10 ou 11, **caractérisée par le fait que** le passage longitudinal (29) est réalisé sur le corps de support (28) et consiste à une ouverture (30) le long de toute l'extension du corps de support (28).

13. Machine (1) pour coupe multiple par fil selon toute revendication qui précède, **caractérisée par le fait que** la partie déplaçable (20) comprend des moyens de guidage des fils de coupe (10) pendant le passage à travers la zone de raccordement (19).

14. Machine (1) pour coupe multiple par fil selon les revendications 12 et 13, **caractérisée par le fait que** les moyens de guidage des fils de coupe (10) comprennent :
un fer plat en saillie (31) positionné sur un bord (32) du logement (13), substantiellement à angle droit de la direction de coulissement (B) et de manière à coulisser dans l'ouverture (30) quand la partie déplaçable (20) coulisse entre la première position (24) et la deuxième position (25).
au moins deux guides (33) positionnés substantiellement à angles droits du fer plat en saillie (31) et parallèles à la direction de coulissement (B).

15. Machine (1) pour coupe multiple par fil selon toute revendication qui précède, **caractérisée par le fait qu'**elle comprend aussi un moyen de déplacement (26) pour la partie déplaçable (20) coulissant de la première position (24) à la deuxième position (25) et inversement.

16. Machine (1) pour coupe multiple par fil selon la revendication 15, **caractérisée par le fait que** le moyen de déplacement (26) comprend un actionneur (27) qui assure le mouvement de la partie déplaçable (20) par rapport à la structure de support (2) dans la direction de coulissement (B).

17. Machine (1) pour coupe multiple par fil selon la revendication 16, **caractérisée par le fait que** l'actionneur (27) est piloté au moyen d'un fluide.

18. Machine (1) pour coupe multiple par fil selon la revendication 16, **caractérisée par le fait que** l'actionneur (27) est actionné électriquement.

19. Machine (1) pour coupe multiple par fil selon l'une des 25 revendications qui précèdent, **caractérisée par le fait que** les poulies motorisées (9) des dispositifs de coupe (7) se composent d'un tambour cylindrique.

20. Machine (1) pour coupe multiple par fil selon l'une des revendications qui précèdent, **caractérisée par le fait que** la direction de coulissement (B) est substantiellement horizontale.

21. Machine (1) pour coupe multiple par fil selon l'une des revendications qui précèdent, **caractérisée par le fait que** le logement (23) s'étend dans un plan perpendiculaire à la direction de coulissement (B).

22. Machine (1) pour coupe multiple par fil selon la revendication 4, **caractérisée par le fait que** le logement (23) est positionné au centre de la surface extérieure (22) de la partie déplaçable (20).

23. Machine (1) pour coupe multiple par fil selon l'une des revendications qui précèdent, **caractérisée par le fait que** la structure de support (2) comprend un double portique (13) présentant deux paires de montants (14), sur chacun desquels un dispositif de support (12) est monté.

24. Machine (1) pour coupe multiple par fil selon l'une des revendications qui précèdent, **caractérisée par le fait que** la structure de support (2) comprend :
une partie fixe (5) ; et
un cadre (6), monté sur la partie fixe (5) et sur lequel sont fixés les dispositifs de coupe ; la machine (1) comprenant également
un chariot (3), sur lequel un bloc (4) de pierre peut être positionné ; et
un moyen de coulissement vertical du cadre (6) et du chariot (3) l'un par rapport à l'autre.
